# EUROPEAN PATENT APPLICATION

(11) **EP 4 343 939 A1**
(43) Date of publication of application: **27.03.2024**
(21) Application number: 22845426.0
(22) Date of filing: 22.07.2022
(51) Int. Cl.: H01M 50/244, H01M 50/242, H01M 50/251, H01M 50/289

(54) **BATTERY AND ELECTRICAL APPARATUS**

(30) Priority: 22.07.2021 CN 202121676848 U
(71) Applicant: Contemporary Amperex Technology Co., Limited, Ningde, Fujian 352100 (CN)
(72) Inventor: WANG, Yongguang, Ningde, Fujian 352100 (CN); LI, Jinfeng, Ningde, Fujian 352100 (CN); CHEN, Yifeng, Ningde, Fujian 352100 (CN); QIN, Feng, Ningde, Fujian 352100 (CN); WANG, Peng, Ningde, Fujian 352100 (CN)
(74) Representative: Rowlands, Stuart Michael
(86) International application number: PCT/CN2022/107251
(87) International publication number: WO 2023/001263

(57) **Abstract**

Embodiments of the present application provide a battery and an electrical apparatus. The battery comprises: a housing, which is used for accommodating battery cells; and a first insulating member, which is disposed in the housing and sleeved on the battery cells, wherein the first insulating member comprises a first base plate, a first extension part formed extending from the surface of the first base plate toward the battery cells, and a second extension part formed extending from the outer edge of the first base plate toward the battery cells; the first extension part is used for positioning the battery cells, and the extension length of the second extension part is greater than the extension length of the first extension part. In the embodiments of the present application, the first extension part and the second extension part are disposed on the first base plate of the first insulating member, which may solve the problem of a colloid easily flowing to an electrical connection region of the end of the battery by means of the first insulating member.

## Description

### Cross-Reference to Related Applications

The present application claims priority to Chinese Patent Application No. 202121676848.8, entitled "BATTERY AND ELECTRICAL APPARATUS", filed on July 22, 2021, the entire contents of which are incorporated herein by reference.

### Technical Field

The present application relates to the technical field of energy storage devices, and in particular to a battery and an electrical apparatus.

### Background Art

With the continuous development of new energy technologies, the requirements for battery technologies become increasingly higher. Currently, in order to fix a plurality of battery cells in a case, glue will be potted into the case after a plurality of battery cells are disposed in a case. However, the glue tends to flow into the electrically connecting region at the end portion of the battery from the gaps between the battery cells or the like, resulting in the parts at the end portion and used for electrical connection being bonded together with the case, thereby affecting after-sales maintenance and the like.

### Summary of the Invention

Embodiments of the present application provide a battery and an electrical apparatus to address the problem that glue tends to flow into the electrically connecting region at the end portion of the battery.

Embodiments of a first aspect of the present application provide a battery comprising: a case for accommodating battery cells; and a first insulating component disposed in the case and at least partially sleeved on the battery cells, the first insulating component comprises a first substrate and a first extending portion extending from a surface of the first substrate toward the battery cells, the first extending portion is used to position the battery cells, the first insulating component further comprises a second extending portion extending from an outer edge of the first substrate toward the battery cells, and an extension length of the second extending portion is greater than an extension length of the first extending portion.

According to an embodiment of the first aspect of the present application, the first extending portion is enclosed to form a positioning slot, at least a portion of the battery cells is located in the positioning slot, the first extending portion comprises a first end face away from the first substrate, the first end face is provided with a guide portion, and the guide portion is spaced apart around the positioning slot.

According to any foregoing embodiment of the first aspect of the present application, in an extending direction of the second extending portion, the length of the second extending portion is greater than or equal to the sum of the length of the first extending portion and a length of the guide portion.

According to any foregoing embodiment of the first aspect of the present application, in the extending direction of the second extending portion, the extension length of the second extending portion is less than the length of the battery cells.

According to any foregoing embodiment of the first aspect of the present application, the maximum spacing between the second extending portion and an inner wall surface of the case is less than the maximum spacing between the first extending portion and the outer surface of the battery cells.

According to any foregoing embodiment of the first aspect of the present application, the maximum spacing between the second extending portion and the inner wall surface of the case is less than the minimum spacing between two adjacent battery cells.

According to an embodiment of the first aspect of the present application, the first extending portion and the second extending portion are provided integrally.

According to any foregoing embodiment of the first aspect of the present application, the battery further comprising:

a second insulating component disposed in the case and sleeved on the battery cells, the second insulating component is on a side of the first insulating component facing an opening of the case, and the second insulating component is provided with a glue potting port and a first wiring harness channel;

the first insulating component is provided with a second wiring harness channel, the first wiring harness channel and the second wiring harness channel are disposed along the height direction of the battery respectively, the glue potting port and the first wiring harness channel are disposed on either side of the second insulating component in a width direction of the battery respectively.

According to any foregoing embodiment of the first aspect of the present application, the second insulating component further comprises a second substrate and a third extending portion extending from a surface of the second substrate toward the battery cells, and the third extending portion is used to position the battery cells.

Embodiment of a second aspect of the present application further provides an electrical apparatus. The electrical apparatus comprises the battery according to any foregoing embodiment of the first aspect of the present application, the battery is used to provide power to electrical apparatus.

In the battery according to the embodiment of the present application, the battery comprises a case, battery cells located in the case, and a first insulating component sleeved on the battery cells inside the case. On one hand, the first insulating component can ensure the stability of the relative position between the battery cells and the case, and improve the safety of the battery affected by relative shaking between battery cells and the case due to the shaking during transportation, installation and the like. On the other hand, the first insulating component comprises a first extending portion and a second extending portion, the first extending portion may be used to position the battery cells. When the first insulating component is disposed in the case, the second extending portion is located at the outer edge of the first substrate, and the first insulating component abuts against the inner wall surface of the case via the second extending portion. The second extending portion extends from the first substrate, to increase the length of the gap between the first insulating component and the inner wall surface of the case. When the glue flows along the gap between the first insulating component and the inner wall surface of the case toward the electrically connecting region at the end portion of the battery, as the glue gradually coagulates during flowing, the flow resistance for the glue increasingly higher, thereby reducing the amount of the glue flowing into the electrically connecting region at the end portion of the battery. In addition, the extension length of the second extending portion is greater than the extension length of the first extending portion, so that a glue receiving space can be formed in the second extending portion, so that more glue is retained in the glue receiving space enclosed by the second extending portion, thus, further reducing the amount of glue flowing into the electrically connecting region at the end portion of the battery via the gap between the second extending portion and the inner wall surface of the case. Therefore, in the embodiment of the present application, by providing the first extending portion and the second extending portion on the first substrate of the first insulating component, the problem that the glue tends to flow into the electrically connecting region at the end portion of the battery can be addressed.

### Description of Drawings

Other features, objects, and advantages of the present application will become more apparent by reading the following detailed description of non-limiting embodiments with reference to the accompanying drawings, wherein same or similar reference numerals refer to same or similar features.
Fig. 1 is a schematic structural diagram of a vehicle according to some embodiments of the present application;
Fig. 2 is a three-dimensional structural diagram of a battery according to some embodiments of the present application;
Fig. 3 is an exploded view of the battery shown in Fig. 2;
Fig. 4 is a three-dimensional structural diagram of a first insulating component according to some embodiments of the present application;
Fig. 5 is a top view of Fig. 4;
Fig. 6 is a schematic diagram showing the assembling of the first insulating component in Fig. 4 and Fig. 5 and some of the battery cells;
Fig. 7 is a cross-sectional view at A-A in Fig. 6;
Fig. 8 is a side view of the battery shown in Fig. 2;
Fig. 9 is a cross-sectional view at B-B in Fig. 8;
Fig. 10 is a partial enlarged view at II in Fig. 9;
Fig. 11 is a partial enlarged view at III in Fig. 3;
Fig. 12 is a cross-sectional view at C-C in Fig. 8;
Fig. 13 is a three-dimensional structural diagram of a second insulating component according to some embodiments of the present application.

### Description of Reference Numerals:

1-vehicle, 1a-motor, 1b-controller;
10-battery;
100-case, 110-top cap, 111-upper connector, 120-bottom plate, 121-lower connector, 130-middle frame;
200-battery cells;
300-first insulating component, 300a-second wiring harness channel, 310-first substrate, 311-connecting hole; 312-first surface, 313-second surface, 314-third side surface, 320-first extending portion, 321-positioning slot, 322-guide portion, 323-first end face, 330-second extending portion;
400-second insulating component, 400a-glue potting port, 400b-first wiring harness channel, 410-second substrate, 420-third extending portion, 430-positioning hole;
500-glue blocking cap;
X-extending direction of the second extending portion, Y-width direction of the battery;
L1-length of the first extending portion, L2-length of the second extending portion, L3-length of the guide portion, L4-length of the battery cells;
D1-maximum spacing between the second extending portion and the inner wall surface of the case, D2-maximum spacing between the first extending portion and the outer surface of the battery cells, D3-minimum spacing between two adjacent battery cells.

### Detailed Description

Features and exemplary embodiments of various aspects of the present application will be described in detail below. In the following detailed description, numerous specific details are presented in order to provide a thorough understanding of the present application. However, it will be apparent to those skilled in the art that the present application may be practiced without some of these specific details. The following description of the embodiments is merely intended to provide a better understanding of the present application by showing examples of the present application. In the drawings and the following description, at least some of well-known structures and techniques are not shown in order to avoid unnecessarily obscuring the present application; and, for clarity, the size of some structures may be exaggerated. In addition, features, structures, or characteristics described below may be incorporated in one or more embodiments in any suitable manner.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first," "second," and the like are for descriptive purposes only, and cannot to be construed as indicating or implying relative importance.

The orientational words appearing in the following description are directions shown in the figures, and are not intended to limit the specific structure of the embodiments of the present application. In the description of the present application, it should be noted that the terms "mounting" and "connecting" should be understood in a broad sense, unless otherwise explicitly specified or defined. For example, it may be a fixed connection, a detachable connection, or an integrated connection; and it may be a direct connection, or may be an indirect connection. For those of ordinary skill in the art, the specific meanings of the above terms in the present application may be understood according to specific circumstances.

In the present application, battery cells may include lithium-ion secondary battery cells, lithium-ion primary battery cells, lithium-sulfur battery cells, sodium/lithium-ion battery cells, sodium-ion battery cells, or magnesium-ion battery cells, etc., which are not limited in the embodiments of the present application. In the present application, the battery cells may be cylindrical, flat, rectangular, or in other shapes. In the following description, the cylindrical battery cells is used as an example, it is also not limited in the embodiments of the present application. In the present application, various functional structures may be provided on the battery cells, for example, an electrode terminal for electrically connecting with other components or other battery cells, a liquid injection hole for injecting electrolyte solution, an explosion-proof structure being actuated to adjust the air pressure abnormality when the internal air pressure of the battery cells is abnormal, and the like.

The battery mentioned in the embodiments of the present application refers to a single physical module including one or more battery cells to provide a higher voltage and capacity. For example, the battery mentioned in the present application may include a battery module, a battery pack, or the like. The battery typically includes a box body for encapsulating one or more battery cells. The box body can prevent liquids or other foreign matters from affecting charging or discharging of the battery cells.

Existing battery structures usually use insulators to divide the internal space into an electrically connecting region and a non-electrically connecting region. In order to improve the mounting stability of battery cells in a battery, and reduce shaking of battery cells during use of the battery, such as vehicle driving and battery handling, a glue potting process is usually made in a non-electrically connecting region. However, the inventor found that, after the glue potting process, the maintenance or inspection of the electrically connecting region of the battery is affected, which leads to direct scrap of many batteries and wasting of resources, since the glue tends to flows into the electrically connecting region at the end portion of the battery.

In view of this, an embodiment of the present application provides a battery including a first insulating component, the first insulating component includes a first substrate, and a first extending portion and a second extending portion extending from the first substrate, and the extension length of the second extending portion is greater than the extension length of the first extending portion. The second extending portion is used to abut against the inner wall of the battery case to form an elongate gap, so that the glue will take a long period of time to flow through the gap, and is more likely to coagulate in the gap, so as to reduce the probability that the glue flows into the electrically connecting region at the end portion of the battery via the first insulating component.

The first insulating component described in the embodiments of the present application is suitable for batteries and electrical apparatus using batteries. The electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new-energy vehicle. The new-energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical apparatus is not specially limited in the embodiments of the present application.

In the following embodiments, for the convenience of description, as an example, the electrical apparatus is illustrated as vehicle 1.

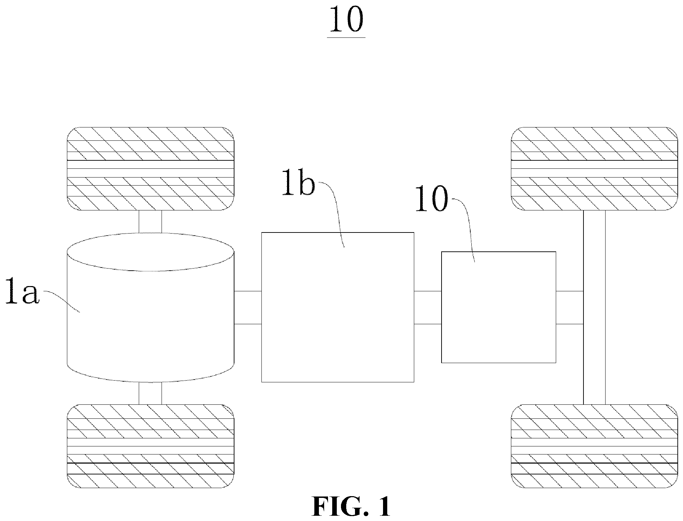

Refer to Fig. 1, Fig. 1 is a schematic structural diagram of a vehicle 1 according to some embodiments of the present application. As shown in Fig. 1, the vehicle 1 may include a motor 1a, a controller 1b, and a battery 10. The controller 1b is used to control the battery 10 to supply power to the motor 1a. The motor 1a is connected to wheels through a transmission mechanism, thereby driving the vehicle 1 to travel. The battery 10 may serve as the driving power source for the vehicle 1, and provide driving power for the vehicle 1 instead of or partially instead of fuel or natural gas.

In one example, the battery 10 may be disposed at the bottom or the head or tail of the vehicle 1. The battery 10 may be used to power the vehicle 1. In one example, the battery 10 may be used for the circuit system of the vehicle 1 as the operating power source for the vehicle 1. Optionally, the battery 10 may be used as operating power of the vehicle 1 during starting, navigation and running.

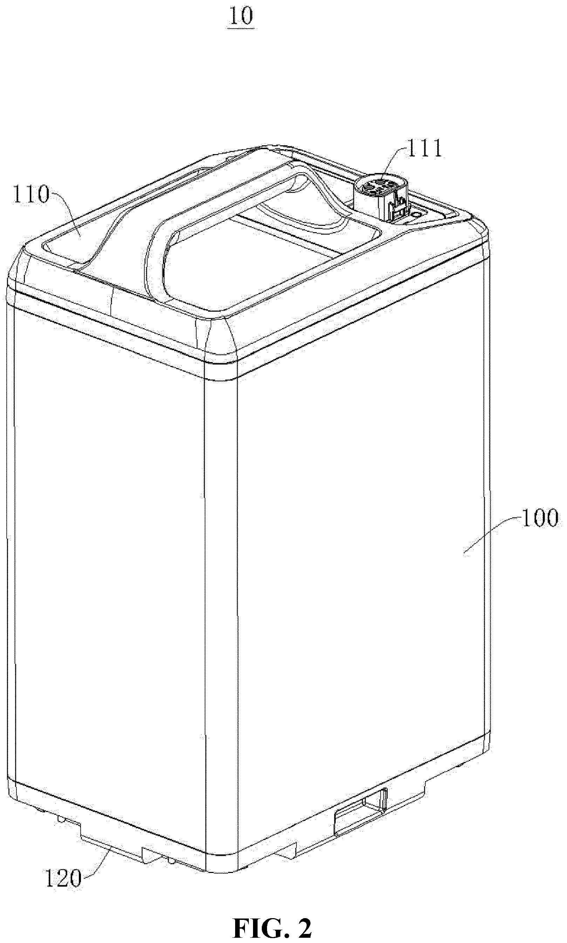

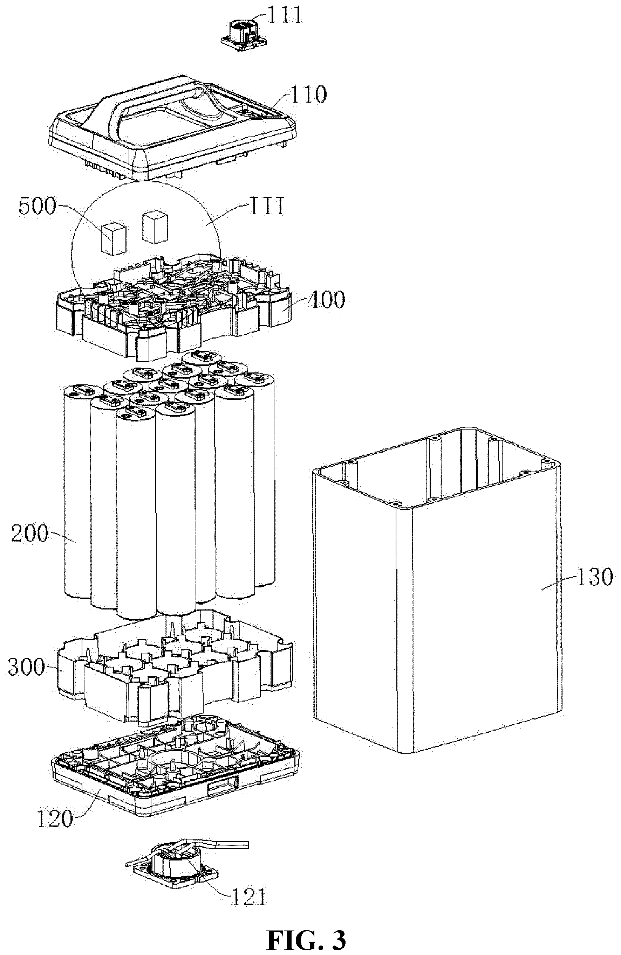

Refer to Figs. 2 and 3, Fig. 2 is a three-dimensional structural diagram of a battery 10 according to some embodiments of the present application. Fig. 3 is an exploded view of the battery 10 shown in Fig. 2. As shown in Figs. 2 and 3, the battery 10 according to the embodiment of the second aspect of the present application includes: a case 100 for accommodating the battery cells 200; and a first insulating component 300 disposed in the case 100 and at least partially sleeved on the battery cells 200. The first insulating component 300 is used to limit the position of the battery cells 200, so as to ensure stability of the relative position between the battery cells 200 and the case 100, and improve the service life of battery cells 200 affected by relative shaking between battery cells 200 and the case 100 due to the shaking during transportation, installation and the like.

As shown in Figs. 2 and 3, the case 100 may include a middle frame 130, a top cap 110 and a bottom plate 120 disposed on the middle frame 130. As shown in Fig. 3, the middle frame 130 may be in a prism shape. In other embodiments, the middle frame 130 may also be cylindrical. The top cap 110 may also be provided with an upper connector 111 such that a plurality of battery cells 200 located within the case 100 may be electrically connected to the outside through the upper connector 111. The bottom plate 120 may also be provided with a lower connector 121, and a plurality of battery cells 200 may be connected to the lower connector 121.

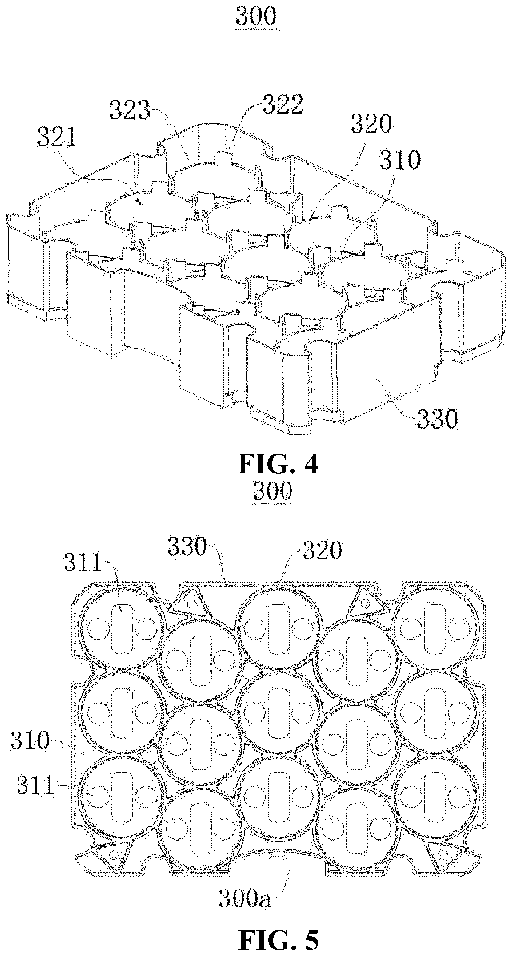

Refer to Figs. 3, 4, and 5 together, Fig. 4 is a three-dimensional structural diagram of a first insulating component 300 according to some embodiments of the present application, and Fig. 5 is a top view of Fig. 4.

As shown in Figs. 3, 4, and 5, in some embodiments, the first insulating component 300 includes a first substrate 310 (not shown in Fig. 4, shown in Fig. 5) and a first extending portion 320 extending from the surface of the first substrate 310 toward the battery cells 200, and a second extending portion 330 extending from an outer edge of the first substrate 310 toward the battery cells 200, the first extending portion 320 is used to position the battery cells 200, and the extension length of the second extending portion 330 is greater than the extension length of the first extending portion 320.

In the battery 10 according to the embodiment of the present application, the battery 10 includes a case 100, battery cells 200 located in the case 100, and a first insulating component 300 sleeved on the battery cells 200 in the case 100. On one hand, the first insulating component 300 can ensure the stability of the relative position between the battery cells 200 and the case 100, and improve the service life of the battery cells 200 affected by relative shaking between battery cells 200 and the case 100 due to the shaking during transportation, installation and the like. On the other hand, the first insulating component 300 includes a first extending portion 320 and a second extending portion 330, the first extending portion 320 may be used to position battery cells 200.

Since the second extending portion 330 being disposed at an outer edge of the first substrate 310, when the first insulating component 300 is disposed in the case 100, the first insulating component 300 may abut against the inner wall surface of the case 100 via the second extending portion 330. In addition, since the second extending portion 330 extending out of the first extending portion 320, a relatively elongate gap can be formed between the second extending portion 330 and the inner wall surface of the case 100. A long period of time is required when the glue flows along the gap toward the electrically connecting region at the end portion of the battery, and therefore, the glue is more likely to coagulate in the gap, so as to make it impossible to flow into the electrically connecting region at the end portion of the battery. This in turn reduces the probability of the glue flowing into the electrically connecting region at the end portion of the battery. Here, it should be noted that the end portion of the battery 10 refers to a space in the battery 10 which is on the side of the first insulating component 300 facing away from the battery cells 200.

In addition, since the glue will also pass through the gap formed between the first substrate 310 and the end face of the battery cells 200 when flowing into the electrically connecting region along the first extending portion 320, in this way, it is relatively difficult for the glue to flow into the electrically connecting region. When the glue flows through the gap formed between the second extending portion 330 and the inner wall surface of the case 100, the glue is likely to flow into the electrically connecting region through the gap under gravity. Therefore, it is possible to make the extension length of the second extending portion 330 greater than the extension length of the first extending portion 320, and form a relatively elongate gap between the second extending portion 330 and the inner wall surface of the case 100, so that the probability of the glue flowing into the electrically connecting region at the end portion of the battery can be reduced on the whole.

Furthermore, the extension length of the second extending portion 330 being greater than the extension length of the first extending portion 320 may also result in a "bowl-shaped" glue receiving space enclosed by the second extending portion 330, so that more glue remains in the space enclosed by the second extending portion 330, and flows toward the space between a plurality of battery cells 200 and the space between the first extending portion 320 and the battery cells 200, so that more glue is used to bond adjacent battery cells 200 and bond the first extending portion 320 and the battery cells 200, thereby improving the positioning of battery cells 200 within battery 10 and enhancing the stability of the battery cells 200.

Therefore, in the embodiment of the present application, by providing the first extending portion 320 and the second extending portion 330 on the first substrate 310 of the first insulating component 300, the problem that the glue tends to flow into the electrically connecting region at the end portion of the battery can be addressed. The embodiment of the present application can reduce the impact on after-sales service due to the difficulty of disassembly or replacement of the parts in the electrically connecting region at the end portion of the battery bonded together with the case 100.

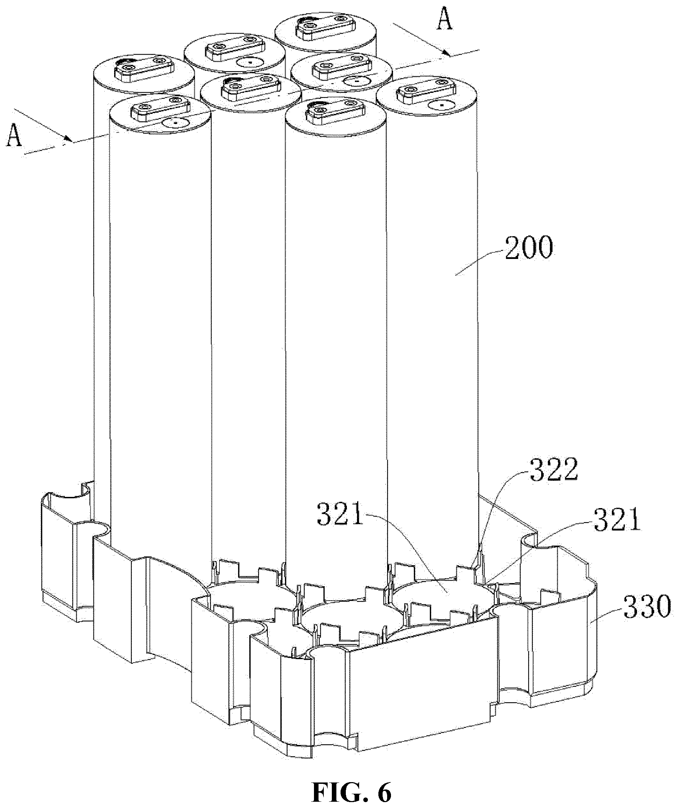

Refering to Figs. 5 and 6 together, Fig. 6 is a schematic diagram showing the assembling of the first insulating component 300 and some of the battery cells 200 in Figs. 4 and 5. The first extending portion 320 can position the battery cells 200 in many ways. Optionally, as shown in Figs. 5 and 6, a positioning slot 321 can be formed by enclosing the first extending portion 320, and at least a portion of the battery cells 200 is located in the positioning slot 321.

The size of the positioning slot 321 may just match the size of battery cells 200, or may be larger than the size of battery cells 200, so that it is easier to assemble the battery cells 200. Optionally, the cross-sectional area of the positioning slot 321 may be different in the depth direction of the positioning slot 321. For example, at the top of the positioning slot 321, the cross-sectional area of the positioning slot 321 may be configured to be larger than the size of the battery cells 200, so that the control accuracy required for inserting the battery cells 200 into the positioning slot 321 could be reduced. At the bottom of the positioning slot 321, the cross-sectional area of the positioning slot 321 may be less than the cross-sectional area at the top of the positioning slot 321, so that the cross-sectional area at the bottom of the positioning slot 321 matches better with the size of the battery cells 200. Accordingly, the positioning slot 321 may be in a plurality of shapes, such as a truncated cone hole, a stepped hole, a conical hole and the like.

In these optional embodiments, it is not only can limit the position of the battery cells 200 by providing the positioning slot 321, so as to ensure stability of the relative position between the battery cells 200 and the case 100, but also can effectively improve the assembling efficiency of the battery cells 200 by providing different cross-sectional area of the positioning slot 321 in the depth direction, so as to facilitate insertion assembling of the battery unit 200. In the assembling process of the battery 10, the first insulating component 300 may be disposed in the case 100 first, and then the battery cells 200 may be disposed in the positioning slot 321. Alternatively, a plurality of battery cells 200 may be disposed in the positioning slot 321 first, and then the assembly formed by the battery cells 200 and the first insulating component 300 may be integrally assembled in the case 100.

In addition, compared with other positioning manners, for example, providing a guide sheet around the battery cells 200, the positioning manner by providing the positioning slot 321 makes the relative area between the battery cells 200 and the first extending portion 320 relatively large, so that more glue can flow into a space between the battery cells 200 and the first extending portion 320 along the first extending portion 320 or the outer surface of the battery cells 200, in this way, this part of the glue can be used to reinforce the position of the battery cells 200 in the positioning slot 321, so as to reduce shaking or collision of the battery cells 200 during use of the battery 10, and improve the safety of the battery 10.

In some optional embodiments, as shown in Fig. 5, in order to enable the battery cells 200 electrically connected to the parts in the electrically connecting region located at the end portion of the battery, the first substrate 310 may be further provided with a through connecting hole 311. The connecting hole 311 may be in communication with the positioning slot 321, so that connecting wire or other component can be connected to the battery cells 200 and other parts through the connecting hole 311. Alternatively, when the electrode terminal of the battery cells 200 is disposed toward the bottom of the positioning slot 321, the shape of the connecting hole 311 may match the shape of the electrode terminal of the battery cells 200. In this way, the electrode terminal may partially extend to the electrically connecting region at the end portion of the battery through the connecting hole 311, thereby facilitating electrical connection.

Optionally, the radial size of the connecting hole 311 is less than the radial size of the positioning slot 321. The size of the connecting hole 311 is small, thus reducing the amount of glue flowing into the electrically connecting region at the end portion of the battery from the connecting hole 311. In addition, the size of the connecting hole 311 is small, so that after flowing from the space between the first extending portion 330 and the battery cells 200 toward the electrically connecting region at the end portion of the battery, the glue still needs to continue flowing to the connecting hole 311 along the gap between the first substrate 310 and the battery cells 200, and then flow into the electrically connecting region at the end portion of the battery from the connecting hole 311. In this way, the flow path of the glue can be lengthened, further reducing the amount of glue flowing into the electrically connecting region at the end portion of the battery from the connecting hole 311.

In addition, a through hole for realizing other functions may be provided in the positioning slot 321. As shown in Fig. 5, in addition to the connecting hole 311, a through hole for avoiding the explosion-proof structure of the battery cells 200 may also be provided, and the number of the through holes may match the number of the explosion-proof structures, or may be more than the number of the explosion-proof structures. The shape, position and size of the through holes may match the shape, position and size of the explosion-proof structures. This is not limited in the present application.

The first extending portion 320 includes a first end face 323 away from the first substrate 310. Refer to Fig. 6, the first end face 323 is provided with a guide portion 322, the guide portion 322 is spaced apart around the positioning slot 321.

The guide portion 322 surrounds the positioning slot 321 to play a guiding role when the battery cells 200 is inserted. The number of the guide portions 322 may be flexible. Optionally, each positioning slot 321 may be provided with four guide portions 322 respectively, the four guide portions 322 are uniformly distributed on the positioning slot 321, and the four guide portions 322 can limit the position of the battery cells 200 in different directions, thereby improving assembling efficiency of the battery cells 200. In other embodiments, each positioning slot 321 may be provided with two, three, five or more guide portions 322 respectively. The position of the guide portion 322 may be flexible. A plurality of guide portions 322 may be disposed at different gaps between the adjacent battery cells 200 respectively. Optionally, when a gap between two adjacent battery cells 200 is small, the two battery cells 200 may share one guide portion 322. Without limitation, in order to facilitate insertion of the battery cells 200, in the extending direction of the first extending portion 320, the guide portions 322 may be configured to have a certain slope, so that it is easier to insert the battery cells 200, that is, the guide portion 322 and the outer surface of the battery cells 200 have an included angle, such as 15 degree, 20 degree, etc. This is not limited in the embodiments of the present application.

On one hand, the guide portion 322 can facilitate the assembling of the battery cells 200 into the positioning slot 321, so as to improve the assembling efficiency of the battery cells 200. On the other hand, it is also possible to increase the glue spreading area for fixing the position of the battery cells 200, and enhance the stability of the battery cells 200. In addition, a plurality of guide portions 322 are spaced apart around the positioning slot 321, so that the gap between adjacent battery cells 200 can be reasonably used to dispose the guide portions 322, thereby improving the assembling efficiency of assembling the battery cells 200 into the first insulating component 300, and at the same time, the manner of the guide portions 322 being spaced apart can also save materials, and reduce costs.

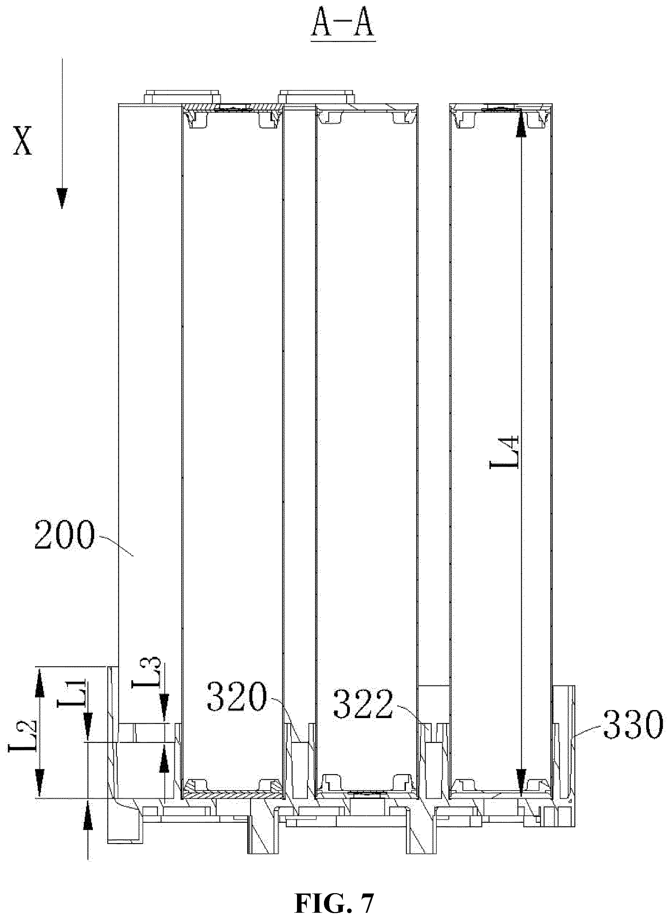

Refer to Fig. 7, Fig. 7 is a cross-sectional view of the C-C in Fig. 6. Optionally, in the extending direction X of the second extending portion 330, the length L2 of the second extending portion 330 is greater than or equal to the sum of the length L1 of the first extending portion 320 and the length L3 of the guide portion 322.

Since the guide portions 322 are disposed circumferentially along the positioning slot 321, in such an arrangement, some of the guide portions 322 may be closer to the second extending portion 330, such that when the length L2 of the second extending portion 330 is greater than the sum of the length L1 of the first extending portion and the length L3 of the guide portion 322, it is possible to reduce the possibility that the part of guide portions 322 close to the second extending portion 330 lead more glue to the gap between the second extending portion 330 and the inner wall surface of the case 100, thereby reducing the probability that the glue flows into the electrically connecting region of the end portion of the battery along this gap.

In addition, when the guide portions 322 are provided, a part of the glue needs to flow through the gaps between the guide portions 322 and the battery cells 200 first, then pass through the gap between the first extending portion 320 and the battery cells 200, then flow through the gap formed between the first substrate 310 and the end face of the battery cells 200, and finally flow into the electrically connecting region at the end portion of the battery, thus, resulting in a long flow path of the glue. Therefore, by providing the length L2 of the second extending portion 330 greater than the sum of the length L1 of the first extending portion and the length L3 of the guide portion 322, the other path through which the glue flows into the electrically connecting region at the end portion of the battery can be lengthened to balance the glue blocking effect, so that the probability of the glue flowing into the electrically connecting region at the end portion of the battery can be reduced on the whole.

Continue to refer to Fig. 7, optionally, in the extending direction X of the second extending portion 330, the extension length L2 of the second extending portion 330 is less than the length L4 of the battery cells 200. The extension size of the second extending portion 330 is small with respect to the length of the battery cells 200, so that an assembling space can be reserved for assembling of other parts on the battery cells 200. For example, when the other end of the battery cells 200 also needs to be assembled with an insulating component, the small extension length of the second extending portion 330 makes the second extending portion 330 have no effect on assembling of other insulating components.

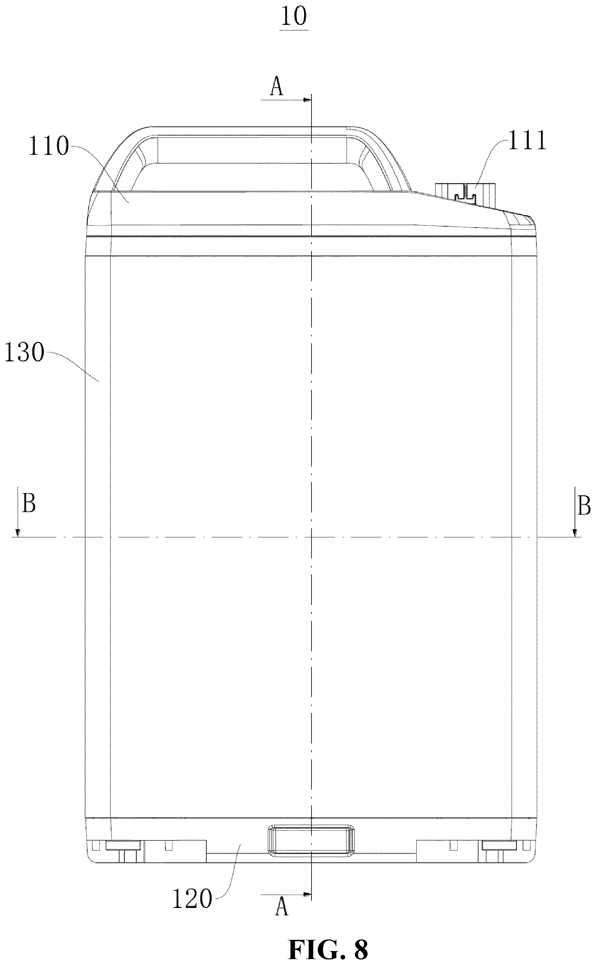

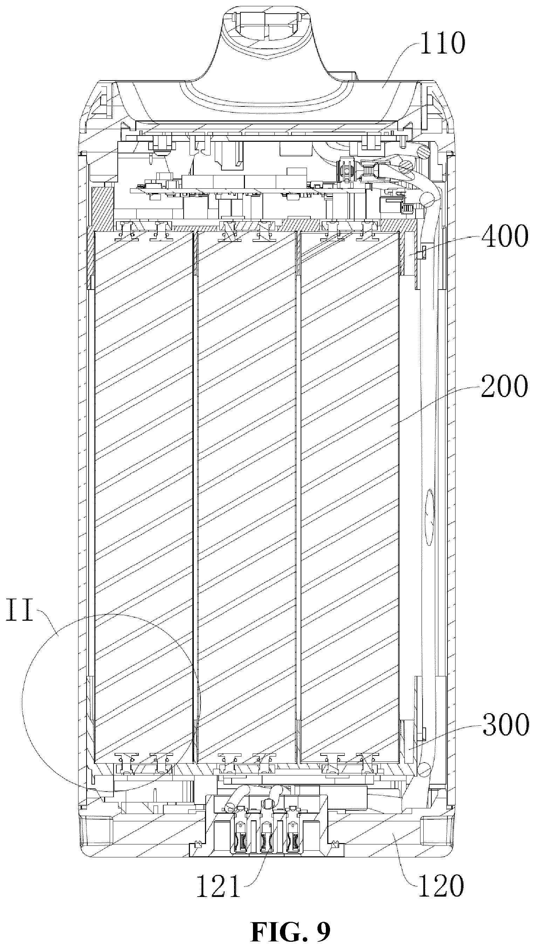

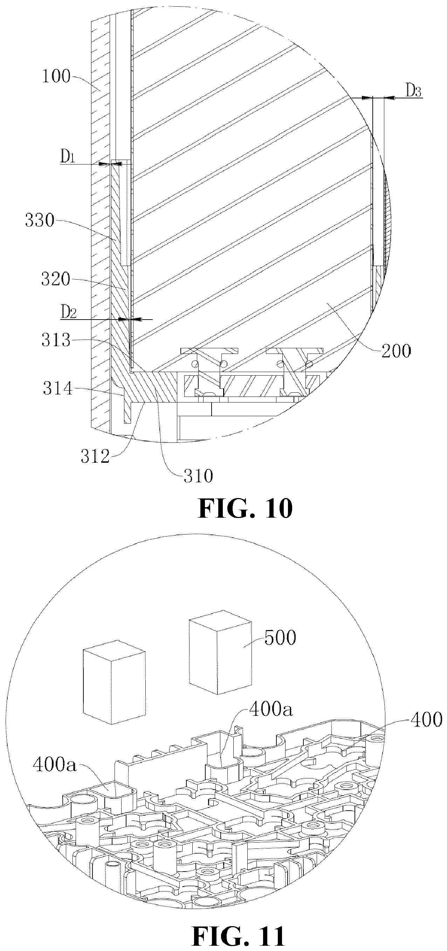

Refer to Figs. 8, 9 and 10, Fig. 8 is a side view of the battery shown in Fig. 2, and Fig. 9 is a cross-sectional view at A-A in Fig. 8. Fig. 10 is a partial enlarged structure diagram at II in Fig. 9.

The first extending portion 320 and the second extending portion 330 are formed by extending the first substrate 310 in many ways. The first substrate 310 may include a first surface 312 and a second surface 313 disposed opposite to each other in its height direction, and a third side surface 314 connecting the first surface 312 and the second surface 313. The first extending portion 320 may extend from the first surface 312 toward the battery cells 200, and the second extending portion 330 may extend from the third side surface 314 toward the battery cells 200. In other embodiments, the second extending portion 330 may also extend from an outer edge of the first surface 312 close to third side surface 314 toward battery cells 200.

Optionally, the maximum spacing D1 between the second extending portion 330 and the inner wall surface of the case 100 is less than the maximum spacing D2 between the first extending portion 320 and the outer surface of the battery cells 200.

Optionally, the value of D1 is, for example, from 0.12 mm to 0.18 mm, for example, the value of D1 is 0.15 mm. The value of D2 is, for example, from 0.16 mm to 0.21 mm, for example, the value of D2 is 0.19 mm.

In these optional embodiments, on one hand, the gap between the second extending portion 330 and the inner wall surface of the case 100 is small, which can increase the resistance when the glue flows between the second extending portion 330 and the inner wall surface of the case 100. On the other hand, the gap between first extending portion 320 and the outer surface of the battery cells 200 is large, so that more glue can flow into the glue receiving space enclosed by the second extending portion 330, and further, more glue can flow into the space between the battery cells 200 and the case 100, and flow into the space between the first extending portion 320 and the surface of the battery cells 200, the problem that the glue tends to flow into the electrically connecting region at the end portion of the battery can be improved while improving the fixing capability of the battery cells 200.

Refer to Fig. 10, optionally, the maximum spacing D 1 between the second extending portion 330 and the inner wall surface of the case 100 is less than the minimum spacing D3 between two adjacent battery cells 200.

In some optional embodiments, the maximum spacing D1 between the second extending portion 330 and the inner wall surface of the case 100 is less than the minimum spacing D3 between two adjacent battery cells 200. In this way, the resistance when the glue flows between the second extending portion 330 and the inner wall surface of the case 100 is greater than the resistance when the glue flows between two adjacent battery cells 200, so that more glue flows into the space between two adjacent battery cells 200, so that the battery cells 200 can be fixed in the case 100 by the glue, thereby improving the stability of the relative position between the battery cells 200 and the case 100.

Optionally, a gap may be provided between the first extending portion 320 and the second extending portion 330, and the size of the gap may be set according to the size of the first insulating component 300 and the case 100. Refer to Fig. 10, the first extending portion 320 and the second extending portion 330 may also be provided integrally, in this way, there is no gap between the integrated first extending portion 320 and the second extending portion 330, so that the wasting of glue due to the glue flowing into the gap between the first extending portion 320 and the second extending portion 330 can be avoided.

Refer to Fig. 5, optionally, a plurality of the first extending portions 320 may be integrally connected with each other. In other optional embodiments, a plurality of the first extending portions 320 may be spaced apart with each other when the spacing between the plurality of battery cells 200 is large.

Optionally, two insulating components may be provided in the case 100, and the two insulating components may be provided on either side of the battery cells 200 in the height direction of the battery 10, so as to further improve stability of relative position between the battery cells 200 and the case 100. Accordingly, the battery 10 may further include a second insulating component 400, the second insulating component 400 may also be disposed in the case 100 and sleeved on the battery cells 200, and the second insulating component 400 may be on a side of the first insulating component 300 facing the battery cells 200.

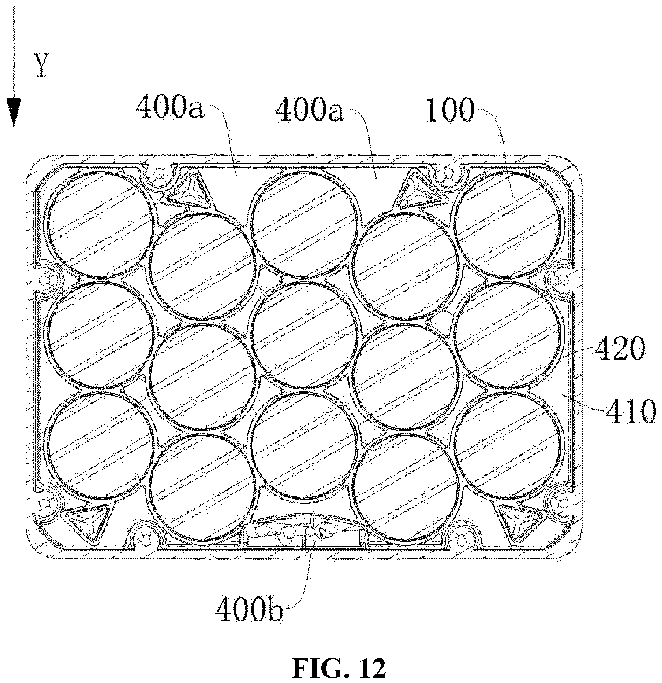

Refer to Figs. 11 and 12, Fig. 11 is a partial enlarged view at III in Fig. 3, and Fig. 12 cross-sectional view at B-B in Fig. 8. Refer to Fig. 11, in some optional embodiments, the second insulating component 400 may be further provided with a glue potting port 400a. The number of the glue potting ports 400a may be two. In other embodiments, the number of the glue potting ports 400a may be one, three, or more. The glue may be potted into the case 100 through the glue potting port 400a.

Optionally, as shown in Fig. 11, the battery 10 may further include a glue blocking cap 500 for sealing the glue potting port 400a. After the glue potting step is completed, the glue blocking cap 500 may be disposed in the glue potting port 400b to seal the glue potting port 400a. The material of the glue blocking cap 500 is, for example, foam, so that the glue blocking cap 500 has certain elasticity, and the sealing performance of the glue potting port 400a can be improved.

As shown in Fig. 12, the second insulating component 400 may further be provided with a first wiring harness channel 400b, the first insulating component 300 may be provided with a second wiring harness channel (not shown in the figure), the first wiring harness channel 400b and the second wiring harness channel may be used to limit the position of the wire in the case 100. In addition, the first wiring harness channel 400b and the second wiring harness channel are disposed in the height direction (not shown in the figure) of the battery respectively, so that the wire can be led out to the electrically connecting region at the end portion of the battery through the first wiring harness channel 400b and the second wiring harness channel.

As shown in Fig. 12, the glue potting port 400a and the first wiring harness channel 400b may be provided at either end of the second insulating component 400 in the width direction (shown as Y direction in the figure) of the battery respectively. In this way, the spacing between the glue potting port 400a and the first wiring harness channel 400b is relatively large. The glue potted via the glue potting port 400a needs to pass through the gaps between the plurality of battery cells 200 to flow to the side where the first wiring harness channel 400b is on. In this way, the amount of glue flowing into the electrically connecting region at the end portion of the battery from the first wiring harness channel 400b and the second wiring harness channel 300a can be reduced.

The glue potting port 400a and the first wiring harness channel 400b can be formed in many ways, for example, the glue potting port 400a and the first wiring harness channel 400b may be formed by perforating the second insulating component 400, or formed due to depression of a side of the second insulating component 400 towards the battery cells. The second wiring harness channel 300a may be formed in the same way as the first wiring harness channel 400b, or may be different.

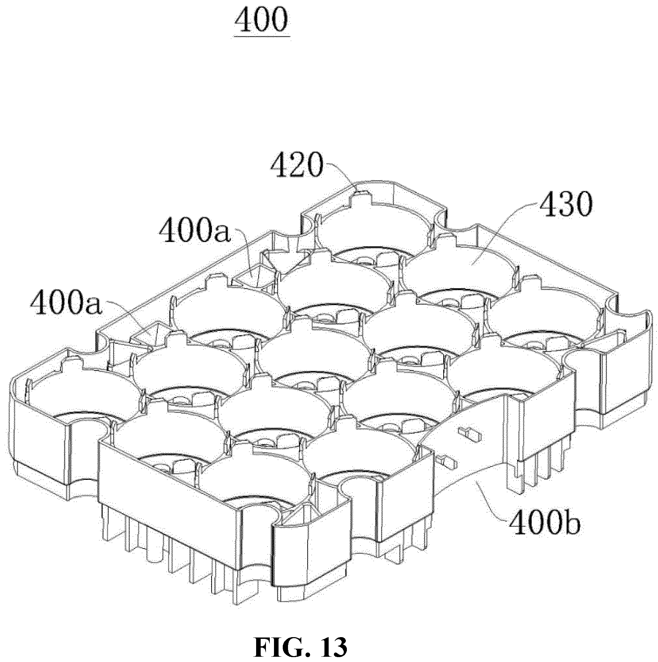

Refer to Figs. 12 and 13, Fig. 13 is a three-dimensional structural diagram of a second insulating component 400 according to some embodiments of the present application. Optionally, the second insulating component 400 may further include a second substrate 410 and a third extending portion 420 extending from the surface of the second substrate 410 toward the battery cells 200, the third extending portion 420 is used to position the battery cells 200. In some optional embodiments, the second insulating component 400 further includes a second substrate 410 and a third extending portion 420 extending from the surface of the second substrate 410 toward the battery cells 200, the third extending portion 420 being used to position the battery cells 200. By providing the third extending portion 420, the assembling speed of the battery cells 200 and the second insulating component 400 can be accelerated.

The structure of the second insulating component 400 may be partially same as the first insulating component 300, for example, the positioning slot 321, the connecting hole 111, and the like in the foregoing contents may be disposed on the first insulating component 300 and the second insulating component 400.

Optionally, the battery 10 may further include a paired-lock connecting element for connecting between the first insulating component 300 and the second insulating component 400 to prevent the first insulating component 300 and the second insulating component 400 from sliding relative to each other.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery comprising:
a case for accommodating battery cells;
a first insulating component disposed in the case and at least partially sleeved on the battery cells, the first insulating component comprising a first substrate and a first extending portion extending from a surface of the first substrate toward the battery cells, the first extending portion is used to position the battery cells,
the first insulating component further comprising a second extending portion extending from an outer edge of the first substrate toward the battery cells, and an extension length of the second extending portion is greater than an extension length of the first extending portion.

2. The battery according to claim 1, wherein the first extending portion is enclosed to form a positioning slot, at least a portion of the battery cells is located in the positioning slot, the first extending portion comprising a first end face away from the first substrate, the first end face is provided with a guide portion, and the guide portion is spaced apart around the positioning slot.

3. The battery according to claim 2, wherein in an extending direction of the second extending portion, the length of the second extending portion is greater than or equal to the sum of the length of the first extending portion and a length of the guide portion.

4. The battery according to any one of claims 1-3, wherein in the extending direction of the second extending portion, the extension length of the second extending portion is less than the length of the battery cells.

5. The battery according to any one of claims 1-4, wherein the maximum spacing between the second extending portion and an inner wall surface of the case is less than the maximum spacing between the first extending portion and the outer surface of the battery cells.

6. The battery according to any one of claims 1-5, wherein the maximum spacing between the second extending portion and the inner wall surface of the case is less than the minimum spacing between two adjacent battery cells.

7. The battery according to any one of claims 1-6, wherein the first extending portion and the second extending portion are provided integrally.

8. The battery according to any one of claims 1-7, further comprising:
a second insulating component disposed in the case and sleeved on the battery cells, the second insulating component is on a side of the first insulating component facing an opening of the case, and the second insulating component is provided with a glue potting port and a first wiring harness channel;
the first insulating component is provided with a second wiring harness channel, the first wiring harness channel and the second wiring harness channel are disposed along a length direction of the battery cells respectively, and the glue potting port and the first wiring harness channel are disposed on either side of the second insulating component in a width direction of the battery respectively.

9. The battery according to claim 8, wherein the second insulating component further comprising a second substrate and a third extending portion extending from a surface of the second substrate toward the battery cells, the third extending portion is used to position the battery cells.

10. An electrical apparatus, the electrical apparatus comprising the battery according to any one of claims 1-9, and the battery is used to provide electric energy to the electrical apparatus.
